# EUROPÄISCHE PATENTANMELDUNG

(11) **EP 2 559 476 A1**
(43) Veröffentlichungstag der Anmeldung: **20.02.2013**
(21) Anmeldenummer: 11177910.4
(22) Anmeldetag: 18.08.2011
(51) Int. Cl.: B01D 53/78, B01D 53/96

(54) **Verfahren und Vorrichtung zum Abzug von leicht flüchtigen Degradationsprodukten aus dem Absorptionsmittelkreislauf eines CO2 Abscheideprozesses**

(71) Anmelder: SIEMENS AKTIENGESELLSCHAFT, 80333 München (DE)
(72) Erfinder: Fischer, Björn, 60318 Frankfurt a.M. (DE); Kuettel, Diego Andres, 65934 Frankfurt am Main (DE); Gilling, Erwin Johannes Martinus, Dr., 2625 AS Delft (NL); Goetheer, Earl Lawrence Vincent, Dr., 2200 Mol (BE); Joh, Ralph, Dr., 63500 Seligenstadt (DE); Kinzl, Markus, Dr., 63128 Dietzenbach (DE); Schneider, Rüdiger, Dr., 65817 Eppstein (DE); Urbanus, Jan Harm, 3622 EW Loenen aan de Vecht (NL)

(57) **Zusammenfassung**

Die Erfindung betrifft ein Verfahren zum Abzug von leicht flüchtigen Degradationsprodukten (7) aus dem Absorptionsmittelkreislauf (1) eines CO₂ Abscheideprozesses (2). Der CO₂ Abscheideprozesses (2) umfasst dabei den Absorptionsmittelkreislauf (1) mit einen Absorptionsprozess (3) und einen Desorptionsprozess (4). Erfindungsgemäß wird einem dem Desorptionsprozess (4) nachgeschalteten Kondensationsprozess (5) Kondensat (6) entnommen, und von Degradationsprodukten (7) weitgehend gereinigt. Das so gebildete, gereinigte Kondensat (8) wird wieder dem Absorptionsmittelkreislauf (1) zurück geführt. Die Erfindung betrifft außerdem eine Vorrichtung, an der das erfindungsgemäße Verfahren ausführbar ist.

## Beschreibung

Bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid dabei mit einem Absorptionsmittel aus dem Rauchgas herausgewaschen (CO₂ Abscheideprozess). Ein derartiger CO₂ Capture Prozess umfasst dabei im Wesentlichen einen Absorber, in dem CO₂ mit einer Absorptionslösung aus dem Rauchgas gewaschen wird, und einem Desorber, in dem CO₂ wieder von der Absorptionslösung ausgetrieben wird.

Gebräuchliche Absorptionslösungen, wie beispielsweise Methanlamin (MEA), Aminosäuresalze oder Pottasche zeigen eine gute Selektivität und eine hohe Kapazität für CO₂.

Durch die im Rauchgas enthaltenen Spurenelemente, wie z.B. SOₓ und NO_{X}, aber auch besonders durch Sauerstoff, neigen alle Absorptionslösungen zur Degradation. Dabei entstehen verschiedene Abbauprodukte (Degradationsprodukte), die besonders bei der Verwendung von Absorptionsmitteln wie Alkanolaminen oder zyklischen Aminen flüchtig sind, und mit dem gereinigten Rauchgas den Absorber verlassen können. Die dadurch entstehenden Emissionen gilt es soweit wie möglich zu verringern.

Ein erster Ansatz zur Verringerung von schädlichen Emissionen ist die Verwendung von Salzen, wie z.B. Aminosauresalzen. Wässrige Absorptionslösungen mit Aminosäuresalzen haben den Vorteil, dass sie selbst keinen Dampfdruck haben, und dadurch ein Austrag aus dem Absorber vermieden werden kann. Die Abbauprodukte von Absorptionslösungen mit Aminosäuresalzen infolge von Degradation sind großteils wieder salzförmige Komponenten und haben daher ebenfalls keinen nennenswerten Dampfdruck. Ein kleiner Teil der Abbauprodukte besteht jedoch auch aus leicht flüchtigen Komponenten, wie z.B. Ammoniak.

Die Abbau- und Degradationsprodukte konzentrieren sich mit der Zeit im Absorptionsmittelkreislauf auf. Besonders bei hohen Temperaturen neigen diese aufgrund des Gleichgewichtes dazu in die Gasphase überzugehen. Aufgrund der großen Rauchgasmengen, und der Aufkonzentrierung über die Zeit, kommt es dabei Zwangsweise zu einem Austrag dieser Komponenten in die Atmosphäre. Bisher wurde versucht diese Emissionen mit einer nachgeschalteten Wäsche am Kopf des Absorbers zu reduzieren. Dies erfordert eine größere Absorberkolonne, hohe Investitionskosten und verursacht einen weiteren verunreinigten Abwasser-, bzw. Absorptionsmittelstrom.

Aufgabe der Erfindung ist es daher ein Verfahren anzugeben, durch welches sich Abbau- und Degradationsprodukte auf einfache weise und unter einem möglichst geringen Energieaufwand aus einem Absorptionsmittelkreislauf eines CO₂ Abscheideprozesses weitgehend beseitigen lassen, ohne dass die Absorptionslösung dabei beeinträchtigt oder geschädigt wird. Außerdem ist es Aufgabe der Erfindung, eine Vorrichtung anzugeben, an der das erfindungsgemäße Verfahren ausführbar ist.

Die auf ein Verfahren gerichtete Aufgabe der Erfindung wird gelöst durch die Merkmale des Anspruchs 1.

Zum Abzug von leicht flüchtigen Degradationsprodukten aus dem Absorptionsmittelkreislauf eines CO₂ Abscheideprozesses, wobei der Absorptionsmittelkreislauf einen Absorptionsprozess und einen Desorptionsprozess umfasst, wird einem dem Desorptionsprozess nach geschalteter Kondensationsprozess Kondensat entnommen, von Degradationsprodukten weitgehend gereinigt, und wieder dem Absorptionsmittelkreislauf zurück geführt wird.

Die Erfindung geht von der Erkenntnis aus, dass in der Gasphase des Desorbers die Konzentration der Abbau- und Degradationsprodukte am größten ist, da die Degradation von hohen Temperaturen begünstigt und das Gleichgewicht hin zur Gasphase verschoben wird. Die Abbauprodukte werden in dem Desorber nachgeschalteten Kondensator wieder verflüssigt und liegen somit gelöst im Kondensatwasser vor.

Der Kondensatstrom ist nur ein kleiner Teilstrom des gesamten Absorptionsmittelkreislaufs. Da nur dieser kleine Teilstrom des Absorptionsmittelkreislaufs gereinigt werden muss kann die Reinigungsvorrichtung wesentlich kleiner ausgestaltet werden, als eine Reinigungsvorrichtung, die den gesamten Absorptionsmittelkreislauf aufnehmen muss. Die Aufreinigung erfolgt auch wesentlich effektiver, da die Degradationsprodukte in dem Kondensat besonders aufkonzentriert sind. Der Kondensatstrom ist auch wesentlich geringer und höher an Degradationsprodukten aufkonzentriert als der gasförmige Abgasstrom am Kopf des Absorbers. Daher ist die Behandlung des Kondensatstroms auch vorteilhaft gegenüber einer dem Absorber nach geschalteten Wäsche. Außerdem ist der Kondensator standardmäßig vorhanden, und muss daher nicht extra eingebaut werden. Der Kondensator ist dem Desorber nachgeschaltet

Besonders vorteilhaft lässt sich die Reinigung des Kondensats dabei destillativ vornehmen. Die Destillation eignet sich besonders als Reinigungsverfahren, da das Ergebnis ein hochreines Kondensat ist. Außerdem kann die für die Destillation erforderliche Wärmeenergie problemlos von dem CO₂ Abscheideprozess bereit gestellt werden. Auch hier ist es vorteilhaft, dass nur das Kondensat als Teilstrom gereinigt werden muss, und nicht das gesamte Absorptionsmittel des Absorptionsmittelkreislaufs.

In einer alternativen Ausführungsform, die aber auch parallel, vor- oder nach geschaltet zu der destillativen Aufreinigung erfolgen kann, wird die Reinigung des Kondensats von Degradationsprodukten über eine Aktivkohlewäsche durchgeführt. Derartige Aktivkohlefilter sind preiswert und benötigen keine zusätzliche Energie. Durch die Aktivkohlefilter ist auch ein hochreines Kondensat erzielbar.

Bei einer weiteren vorteilhaften Ausgestaltung des Verfahrens ist das im Absorptionsmittelkreislauf geführte Absorptionsmittel eine wässrige Lösung eines Amins, einer Aminosäure, oder Pottasche ist. Vorzugsweise ist das Absorptionsmittel dabei eine wässrige Lösung eines primären oder sekundäre Aminosäuresalzes. Aminosäuresalze haben keinen merklichen Dampfdruck, wodurch nahezu kein Aminosäuresalz über den Absorptionsprozess in die Atmosphäre ausgetragen wird. Die Degradationsprodukte der Aminosäuresalze sind ebenfalls wieder Salze, die keinen merklichen Dampfdruck haben.

In Summe ist durch die Verwendung von Aminosäuresalz in Verbindung mit der erfindungsgemäßen Aufreinigung der Degradationsprodukte ein CO₂ Abscheideprozess geschaffen, durch den keine nennenswerten Mengen an waschaktiven Substanzen, oder deren Abbauprodukte, in die Atmosphäre ausgetragen werden könne. Durch das kontinuierliche Reinigen und Abscheiden der Degradationsprodukte aus dem Absorptionsmittel, können sich die Degradationsprodukte nicht mehr, oder nur noch im geringen Maße, auf den Böden oder den Packungen der Kolonnen absetzen. Dies ermöglicht einen längeren Betrieb der CO₂ Abscheidevorrichtung ohne Wartung oder Austausch des Absorptionsmittels.

Die auf eine Vorrichtung gerichtete Aufgabe der Erfindung ist gelöst durch die Merkmale des Anspruchs 5, wonach zum Abzug von leicht flüchtigen Degradationsprodukten aus einem Absorptionsmittel einer CO₂ Abscheidevorrichtung, die einen Absorber und einen Desorber umfasst, die in einen Absorptionsmittelkreislauf geschaltet sind, dem dem Desorber nachgeschalteten Kondensator Kondensat über eine Kondensatabzugsleitung einer Reinigungsvorrichtung zuführbar ist, und ein in der Reinigungsvorrichtung von Degradationsprodukten gereinigtes Kondensat über eine Kondensatrückführleitung wieder dem Absorptionsmittelkreislauf rückführbar ist.

In einer vorteilhaften Ausgestaltung der Vorrichtung, ist die Reinigungsvorrichtung eine Destillationsanlage, durch welche die Degradationsprodukte aus dem Kondensat destillativ abgetrennbar sind. Bei einer alternativen oder zusätzlichen Ausführungsform der Vorrichtung umfasst die Reinigungsvorrichtung einen Aktivkohlefilter, durch den die Degradationsprodukte aus dem Kondensat zurück gehalten werden.

Nachfolgend werden Ausführungsbeispiele der Erfindung anhand von Figuren näher erläutert. Darin zeigt:

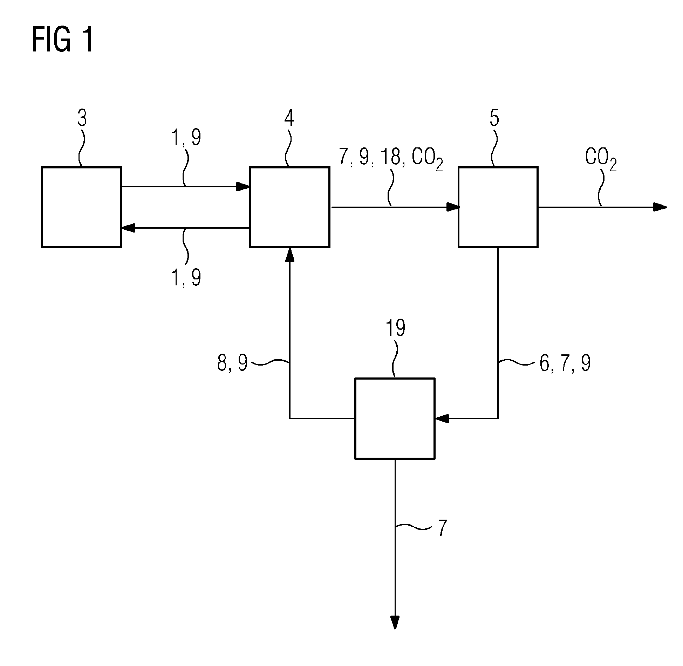

- FIG 1: ein Prozessschaltbild eines Verfahrens zum Aufreinigen eines mit Degradationsprodukten verunreinigten Absorptionsmittels,
- FIG 2: eine CO₂ Abscheidevorrichtung mit einer herkömmlichen Reinigungsvorrichtung,
- FIG 3: eine CO₂ Abscheidevorrichtung mit einer Reinigungsvorrichtung im Kondensatstrom.

FIG zeigt ein Prozessschaltbild eines Verfahrens zum Aufreinigen eines mit Degradationsprodukten 7 verunreinigten Absorptionsmittels 9. Dargestellt sind ein Absorptionsprozess 3 und ein Desorptionsprozess 4, die in einen Absorptionsmittelkreislauf 1 geschaltet sind. Den Desorptionsprozess 4 verlässt ein Brüdendampf 18, der im Wesentlichen aus gasförmiges CO₂, gasförmige Degradationsprodukte 7 und dampfförmiges Absorptionsmittel 9 besteht. Der Brüdendampf 18 wird einem Kondensationsprozess 5 zugeführt, in dem der Brüdendampf 18 gekühlt wird, sodass das dampfförmige Absorptionsmittel kondensiert, und ein Kondensat 6 bildet. In dem Kondensat 6 sind die Degradationsprodukte 7 wieder gebunden. Durch den Kondensationsprozess 5 werden somit gasförmiges CO₂ und kondensiertes Absorptionsmittel 9 von einander getrennt. Den Kondensationsprozess 5 verlassen ein gasförmiges CO₂ und ein Kondensat 6, mit einer hohen Konzentration an leicht flüchtigen Degradationsprodukten 7.

Das Kondensat 6 wird nun einem Reinigungsprozess 19 zugeführt, in dem die Degradationsprodukte 7 herausgefiltert oder abgetrennt werden. Das Herausfiltern kann mittels Aktivkohlefilter geschehen. Zusätzlich oder alternativ dazu kann eine Abtrennung der Degradationsprodukte auch destillativ erfolgen. Die Energie für den hier nicht näher dargestellten Destillationsprozess kann dabei dem Kraftwerksprozess entnommen werden. Aus dem Reinigungsprozess 19 werden die Degradationsprodukte 7 abgezogen und ausgeleitet. Durch den Abzug der Degradationsprodukte 7 aus dem Kondensat 6 wird ein aufgereinigtes Kondensat 8 gebildet, dass wieder dem Desorptionsprozess 4 zurück geführt wird.

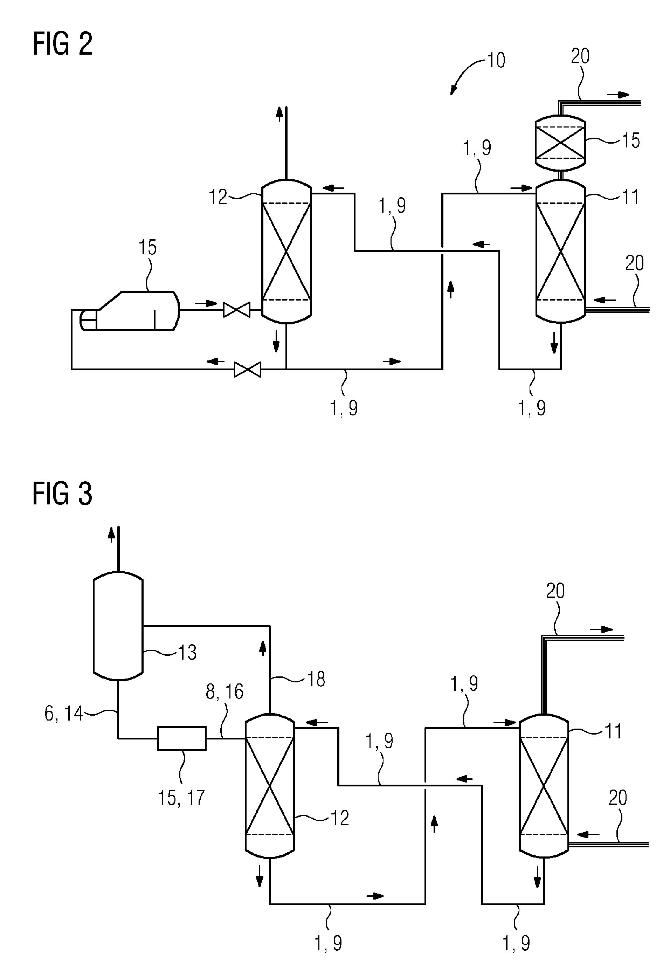

FIG 2 zeigt eine CO₂ Abscheidevorrichtung 10 mit einer herkömmlichen Reinigungsvorrichtung 15. Die CO₂ Abscheidevorrichtung 10 umfasst dabei im Wesentlichen einen Absorber 11 und einen Desorber 12, die über einen Absorptionsmittelkreislauf 1 mit einander verbunden sind. In dem Absorptionsmittelkreislauf 1 wird ein Absorptionsmittel 9 geführt. Der Absorber 11 ist in einen Rauchgaskanal 20 einer fossil befeuerten Kraftwerksanlage geschaltet.

Zum Abzug von leicht flüchtigen Degradationsprodukten 7 aus dem Rauchgasstrom, der den Absorber 11 am Kopf verlässt, ist es bekannt dem Absorber 11 strömungstechnisch in den Rauchgaskanal 20 eine Reinigungsvorrichtung 15 nach zu schalten. Durch diese Reinigungsvorrichtung 15 kann ein Großteil der Degradationsprodukte 7 aus dem Rauchgas abgezogen werden. Diese nachgeschaltete Reinigungsvorrichtung ist jedoch entsprechend dem Rauchgasstrom angemessen groß zu dimensionieren und recht Energieaufwendig.

Eine alternative bekannte Reinigungsvorrichtung 15 zum Abzug von Degradationsprodukten 7 ist in FIG 2 als eine dem Desorber 12 nachgeschaltete Reinigungsvorrichtung 15 dargestellt. Diese Reinigungsvorrichtung 15 ist in den Absorptionsmittelkreislauf der CO₂ Abscheidevorrichtung geschaltet. Somit ist es möglich, die Degradationsprodukte 7 aus dem Absorptionsmittel 9 herauszufiltern oder das Absorptionsmittel 9 aufzubereiten. Da jedoch immer der gesamte Absorptionsmittelstrom behandelt werden muss, ist diese Art der Reinigungsvorrichtung 15 ebenfalls entsprechend groß auszulegen und dadurch im Betrieb auch entsprechend Energieaufwendig.

FIG 3 zeig nun eine CO₂ Abscheidevorrichtung mit einer erfindungsgemäßen Reinigungsvorrichtung 15 im Kondensatstrom. Die in FIG 3 dargestellte CO2 Abscheidevorrichtung 10 umfasst im Wesentlichen, ebenfalls wie bereits zu FIG 2 näher ausgeführt, einen Absorptionsmittelkreislauf 1, in den ein Absorber 11 und ein Desorber 12 geschaltet sind. Zusätzlich zeigt FIG 3 jedoch noch einen Kondensator 13 der dem Desorber zur Zuführung eines Brüdendampfes 18 nachgeschaltet ist. Der Kondensator 13 weist eine Gasleitung zur Ausleitung von gasförmigem CO₂ auf, und eine Kondensatabzugsleitung 14, über die ein Kondensat 6 einer Reinigungsvorrichtung 15 zuführbar ist.

Die Reinigungsvorrichtung 15 kann als Aktivkohlefilter ausgestaltet sein, oder auch als Destillationsanlage 17. Durch die Reinigungsvorrichtung werden die Degradationsprodukte 7 aus dem Kondensat 6 abgezogen. Die Reinigungsvorrichtung 15 ist zur Ausleitung eines aufgereinigten Kondensats 6 über eine Kondensatrückführleitung 16 wieder mit dem Desorber verbunden. Das Kondensat eignet sich dabei deshalb besonders gut zur Aufreinigung, da die Konzentration von Degradationsprodukten 7 im Kondensat 6 besonders hoch ist. Und da das Kondensat 6 nur ein kleiner Teilstrom des gesamten Absorptionsmittels 9 im Absorptionsmittelkreislauf 1 darstellt, kann die Reinigungsvorrichtung entsprechend klein dimensioniert werden, wodurch sich Kosten und Energie einsparen lassen.

Der Vorteil der Erfindung liegt vor allem darin, dass sie sich bei kleinen aber auch bei großen Prozessanlagen, wie beispielsweise einer CO₂ Capture-Anlage gleichermaßen erfolgversprechend anwenden lässt. Auch lässt sich die Erfindung problemlos in bereits bestehende Prozessanlagen integrieren. Durch die Erfindung werden sich in jedem Fall die durch das Rauchgas emittierten Degradationsprodukte, als auch die Konzentration von Degradationsprodukten im Absorptionsmittel wesentlich reduzieren lassen.

## Patentansprüche

1. Verfahren zum Abzug von leicht flüchtigen Degradationsprodukten aus dem Absorptionsmittelkreislauf (1) eines CO₂ Abscheideprozesses (2), wobei der Absorptionsmittelkreislauf (1) einen Absorptionsprozess (3) und einen Desorptionsprozess (4) umfasst, bei dem einem dem Desorptionsprozess (4) nach geschalteten Kondensationsprozess (5) Kondensat (6) entnommen wird, von Degradationsprodukten (7) weitgehend gereinigt wird, wodurch ein aufgereinigtes Kondensat (8) gebildet wird, welches wieder dem Absorptionsmittelkreislauf (1) zurück geführt wird.

2. Verfahren nach Anspruch 1, bei dem die Reinigung des Kondensats (6) von Degradationsprodukten (7) destillativ erfolgt.

3. Verfahren nach Anspruch 1, bei dem die Reinigung des Kondensats (6) von Degradationsprodukten (7) über eine Aktivkohlewäsche erfolgt.

4. Verfahren nach einem der Ansprüche 1 bis 3, bei dem das im Absorptionsmittelkreislauf (1) geführte Absorptionsmittel (9) eine wässrige Lösung eines Amins, einer Aminosäure, oder Pottasche ist.

5. Vorrichtung zum Abzug von leicht flüchtigen Degradationsprodukten (7) aus einem Absorptionsmittel (9) einer CO₂ Abscheidevorrichtung (10), die einen Absorber (11) und einen Desorber (12) umfasst, die in einen Absorptionsmittelkreislauf (1) geschaltet sind,
**dadurch gekennzeichnet, dass** einem dem Desorber (12) nach geschalteter Kondensator (13) Kondensat (6) über eine Kondensatabzugsleitung (14) einer Reinigungsvorrichtung (15) zuführbar ist, und ein in der Reinigungsvorrichtung (15) von Degradationsprodukten (7) gereinigtes Kondensat (8) über eine Kondensatrückführleitung (16) wieder dem Absorptionsmittelkreislauf (1) rückführbar ist.

6. Vorrichtung nach Anspruch 5,
**dadurch gekennzeichnet, dass** die Reinigungsvorrichtung (15) eine Destillationsanlage (17) ist, in der die Degradationsprodukte (7) destillativ von dem Kondensat (6) abgetrennbar sind.

7. Vorrichtung nach Anspruch 6,
**dadurch gekennzeichnet, dass** die Reinigungsvorrichtung (15) einen Aktivkohlefilter umfasst, durch den die Degradationsprodukte (7) aus dem Kondensat (6) zurückhaltbar sind.
